# FASCICULE DE BREVET EUROPEEN

(11) **EP 2 009 527 B1**
(45) Date de publication et mention de la délivrance du brevet: **10.04.2013**
(21) Numéro de dépôt: 08356095.3
(22) Date de dépôt: 26.06.2008
(51) Int. Cl.: G05B 19/042

(54) **Procédé de configuration d'un system d'entraînement d'un écran de fermeture, de protection solaire ou de projection**
Konfigurationsverfahren eines Antriebssystems eines Verschlussschirms, der als Sonnenschutz oder Projektionsschirm fungieren kann
Method of configuring a drive system for an enclosure, sun protection or projection screen

(30) Priorité: 27.06.2007 FR 0704622
(43) Date de publication de la demande: 31.12.2008
(73) Titulaire: Somfy SAS, 74300 Cluses (FR)
(72) Inventeur: Decroix, Christophe, 74800 La Roche sur Foron (FR); Bourgeois, Valérie, 74330 la Balme de Sillingy (FR); Pillon, Laurent, 74130 Bonneville (FR); Scrivo, David, 74800 La Roche sur Foron (FR)
(74) Mandataire: Myon, Gérard Jean-Pierre

(56) Documents cités:
- EP-A- 0 426 577
- EP-A- 0 718 729
- FR-A- 2 882 843

## Description

L'invention concerne un procédé de configuration d'un système comprenant un écran mobile de type volet roulant, store, porte de garage, écran de projection ou élément analogue, entraîné par un actionneur. Un tel actionneur comprend généralement un moteur électrique dont l'alimentation est gérée par une unité électronique. Cette unité électronique interagit avec un organe de contrôle qui peut être fixe, auquel cas le mode de contrôle est filaire, ou nomade, auquel cas le contrôle a lieu par radio ou infra-rouge. Un tel organe de contrôle est parfois dénommé « point de commande ». Dans le cas d'un contrôle par voie filaire, on parle souvent de « boîtier de commande », alors que l'on parle souvent de « télécommande » dans le cas d'un contrôle par voie radio ou infra-rouge. Ainsi, l'activation d'une touche de l'organe de contrôle entraîne l'exécution d'un ordre par l'actionneur. Une touche peut provoquer le mouvement de l'actionneur dans un sens, une autre touche, le mouvement dans l'autre sens.

Pour des raisons de confort et/ou de sécurité, ce type de système permet une gestion automatique de l'ouverture de l'écran. Il est alors nécessaire de programmer la course de l'écran, et notamment, les fins de courses haute et basse. Certains actionneurs gèrent le positionnement de l'écran par une unité électronique en comptant, par exemple, le nombre de tours d'axe effectués et/ou en détectant un couple moteur seuil. Dans ce cas, une phase d'apprentissage est nécessaire, au cours de laquelle l'unité électronique bascule dans un mode permettant la définition des paramètres du système. Ces paramètres identifient la fin de course haute et/ou la fin de course basse.

Pour basculer en mode apprentissage, une première solution consiste à faire varier l'alimentation de l'unité électronique en effectuant par exemple, une double coupure dans un temps déterminé. Cette solution n'est pas pratique si plusieurs actionneurs possèdent la même alimentation et si on ne souhaite pas tous les passer en mode apprentissage en même temps. Il est également connu de réaliser, dans le même but, un shunt entre les deux phases du moteur pendant une durée déterminée. Ce shunt peut être obtenu par un outil de réglage spécifique ou encore en reliant physiquement deux bornes de la carte électronique du point de commande via une pièce métallique. Cette solution demande l'utilisation d'un outil approprié et nécessite, le démontage du système pour pouvoir effectuer le shunt.

Selon une autre approche, on peut appuyer simultanément sur deux touches de l'organe de contrôle, par exemple « montée » et « descente » ou « stop » et « bouton de programmation ». Cette opération, en tant que telle, ne provoque aucun déplacement de l'écran. Il n'est alors pas évident de savoir si l'opération a été correctement effectuée. D'autre part, certains organes de contrôle ne permettent pas l'activation simultanée de deux touches ou n'ont pas de bouton stop ou de bouton de programmation. Cela est particulièrement vrai lors de la rénovation d'un système où l'on ne souhaite pas forcément changer le ou les organes de contrôle et/ou refaire le câblage de l'installation.

Pour résoudre ce problème, WO-A-00/49262 décrit un procédé et un système de configuration utilisant des organes de contrôle à deux touches : ouverture/fermeture. Pour faire basculer une unité électronique commandant un actionneur en mode d'apprentissage, une séquence d'appuis de touches doit être exécutée, chaque touche devant être appuyée dans un temps déterminé. Si cette séquence est réalisée, l'unité électronique bascule en mode d'apprentissage. Avec un tel procédé et un tel système, l'ordre transmis par un organe de contrôle est toujours exécuté avec un décalage temporel afin de vérifier si l'utilisateur ne compose pas un appui de la séquence permettant de basculer en mode d'apprentissage. Ce décalage temporel n'est pas souhaitable en fonctionnement normal. D'autre part, il n'est pas évident de savoir si l'opération pour basculer en mode d'apprentissage a été correctement effectuée puisque aucun mouvement n'est réalisé entre deux appuis sur des touches.

Il est par ailleurs connu de EP-A-0718729 de faire effectuer à un volet roulant un mouvement prédéterminé, de type légère descente puis remontée, après qu'un usager a complètement exécuté une manipulation visant à faire basculer le volet en mode de programmation. Ce n'est qu'après l'entrée en mode de programmation d'une unité de traitement que le mouvement précité du volet a lieu, de sorte que l'usager ne peut pas s'assurer, au fur et à mesure qu'il saisit l'ordre de programmation, que celui-ci est bien correct. En outre, le mouvement de légère descente puis de remontée du tablier n'est pas forcément représentatif de l'ordre de programmation, ce qui peut entraîner une certaine confusion pour l'usager.

L'invention propose un procédé de configuration d'un tel système permettant de pallier les inconvénients précédents.

A cet effet, l'invention concerne un procédé selon la revendication 1

Grâce à l'invention, pour provoquer le basculement de l'unité électronique dans un mode d'apprentissage, l'utilisateur doit exécuter une séquence spécifique d'appuis de touches du point de commande. Dans ce qui suit, l'utilisateur peut être un installateur professionnel d'un système avec écran mobile ou toute autre personne intervenant pour le réglage d'un tel système, y compris l'utilisateur final. Lors de cette opération, chaque touche activée entraîne l'exécution par l'actionneur d'un ordre qui se traduit par le mouvement ou l'arrêt d'un mouvement de l'actionneur, c'est-à-dire par son changement d'état. De cette manière, l'exécution de la séquence spécifique peut être contrôlée visuellement par l'utilisateur qui détecte les mouvements et les arrêts de l'écran, sans devoir attendre d'avoir exécuté la totalité de la séquence prédéterminée d'appuis. En cas d'erreur lors des appuis, l'utilisateur peut s'en rendre compte immédiatement, sans devoir attendre vainement le basculement de l'unité électronique en mode d'apprentissage. L'utilisateur peut ainsi être informé en temps réel que la séquence d'appuis est correctement réalisée et que l'unité électronique va basculer en mode d'apprentissage. En outre, comme l'état de l'actionneur est changé par l'unité électronique en fonction du signal reçu, les mouvements de l'écran peuvent être représentatifs de la séquence d'appuis mise en oeuvre par l'utilisateur, ce qui facilite le contrôle visuel par rapport au cas où le mouvement de l'écran serait toujours le même.

De façon avantageuse, lors de l'exécution de la séquence prédéterminée, un appui sur une touche de l'organe de contrôle provoque le changement d'état de l'actionneur par l'unité électronique de la même façon que lorsque l'organe de contrôle est utilisé pour piloter le système d'entraînement en mode d'utilisation normal. Le contrôle visuel de l'utilisateur lors de la séquence d'appuis prédéterminée en est facilité.

En outre, la séquence prédéterminée d'appuis sur la ou les touches de l'organe de commande n'induit pas que l'écran atteigne une position particulière avant le basculement de l'unité électronique en mode d'apprentissage. De ce fait, l'opération de configuration est simple. Le basculement de l'unité électronique dans un mode d'apprentissage peut être provoqué quelle que soit la position de l'écran.

Dans le cas où l'organe de contrôle est pourvu de plusieurs touches, au moins un signal résultant d'un appui sur une de ces touches lors de la séquence prédéterminée peut ne pas être pris en compte par l'unité électronique comme appartenant à une série prédéterminée de signaux de contrôle induisant le basculement de l'unité électronique en mode d'apprentissage. Un système à plusieurs points de commande n'ayant pas la même ergonomie de fonctionnement, ni le même nombre de touches, peut ainsi disposer d'une procédure pour basculer en mode d'apprentissage homogène.

Le procédé de l'invention peut comprendre des étapes successives dans lesquelles:
a) - l'unité électronique traite des signaux reçus d'au moins un organe de contrôle et fait exécuter à l'actionneur un ordre associé à une touche activée
b) - l'unité électronique identifie la touche initiale de la séquence prédéterminée d'appuis
c) - l'unité électronique compare la touche activée et la touche initiale.

De façon acvantageuse, l'unité électronique bascule en mode d'apprentissage lorsque le résultat de la comparaison de l'étape c) est positif et que l'exécution complète de la séquence d'appuis prédéterminée est détectée par l'unité électronique.

Le procédé peut en outre comprendre des étapes successives, mises en oeuvre si le résultat de la comparaison de l'étape c) est positif et dans lesquelles :
e) - l'unité électronique accède à une mémoire de stockage d'informations relatives à la séquence d'appuis prédéterminée
f) - l'unité électronique identifie une touche suivante à activer selon la séquence d'appuis prédéterminée
g) - lorsqu'elle reçoit un signal l'unité électronique fait exécuter à l'actionneur un ordre associé à la touche dont l'activation correspond au signal reçu
h) - l'unité électronique compare la touche activée à la touche suivante
i) - si le résultat de la comparaison de l'étape h) est positif, l'unité électronique compare la touche suivante identifiée lors de l'étape f) est égale à la touche finale de la séquence d'appuis prédéterminée
alors que les étapes e) et i) sont reproduites tant que le résultat de la comparaison de l'étape h) est positif et que le résultat de la comparaison de l'étape i) est négatif et que l'unité électronique bascule (190) en mode d'apprentissage lorsque le résultat de la comparaison de l'étape i) est positif.

En outre, on peut prévoir que, si le résultat de la comparaison de l'une des étapes c) ou h) est négatif, l'unité électronique passe à un état d'attente à partir duquel elle exécute les étapes a) à c) lorsqu'elle reçoit un signal de la part d'un organe de contrôle.

Pour éviter les opérations involontaires de l'utilisateur, l'exécution de la séquence spécifique peut être limitée dans le temps. Le basculement en mode d'apprentissage est ainsi conditionné à la réalisation de la séquence spécifique d'appuis dans une période de temps déterminée. Pour ce faire, le procédé comprend une étape de vérification que la durée d'exécution de la séquence d'appuis prédéterminée est inférieure à une valeur de seuil et, si le résultat de cette vérification est négatif, l'unité électronique passe à un état d'attente à partie duquel elle exécute les étapes a) à c) lorsqu'elle reçoit un signal de la part d'un organe de contrôle.

Une autre alternative, pour diminuer le risque de basculement involontaire, consiste à intégrer, dans la séquence spécifique, des durées de maintien de touches enfoncées à reproduire. Dans ce cas, le procédé comprend une étape de vérification que la durée d'activation d'une touche lors de la séquence d'appuis prédéterminée a une valeur supérieure à une première valeur de seuil et inférieure à une deuxième valeur de seuil et, si le résultat de cette vérification est négatif, l'unité électronique passe à un état d'attente à partir duquel elle exécute les étapes lorsqu'elle reçoit un signal de la part d'un organe de contrôle.

En plus du contrôle visuel direct au moment de l'exécution de la séquence spécifique, on peut prévoir un retour d'information de confirmation signalant que le mode d'apprentissage est effectivement activé, c'est-à-dire que l'étape de basculement de l'unité électronique en mode d'apprentissage a bien eu lieu. L'utilisateur est alors sûr que le système a basculé en mode d'apprentissage.

La définition de la séquence spécifique peut être faite en mode d'apprentissage, suite à un enchaînement d'appuis de touches particuliers. L'utilisateur peut ainsi personnaliser cette séquence.

L'invention sera mieux comprise à la lecture de la description qui va suivre, donnée uniquement à titre d'exemple et faite en se référant aux dessins annexés sur lesquels :
- la figure 1 est une vue schématique d'un système d'entraînement avec lequel peut être mise en oeuvre l'invention ;
- la figure 2 est un ordinogramme illustrant un procédé de configuration selon l'invention
- la figure 3 est un ordinogramme partiel pour une variante de l'ordinogramme de la figure 2 introduisant une première fonction supplémentaire ; et
- la figure 4 est un autre ordinogramme partiel pour une autre variante de l'ordinogramme de la figure 2 introduisant une seconde fonction supplémentaire.

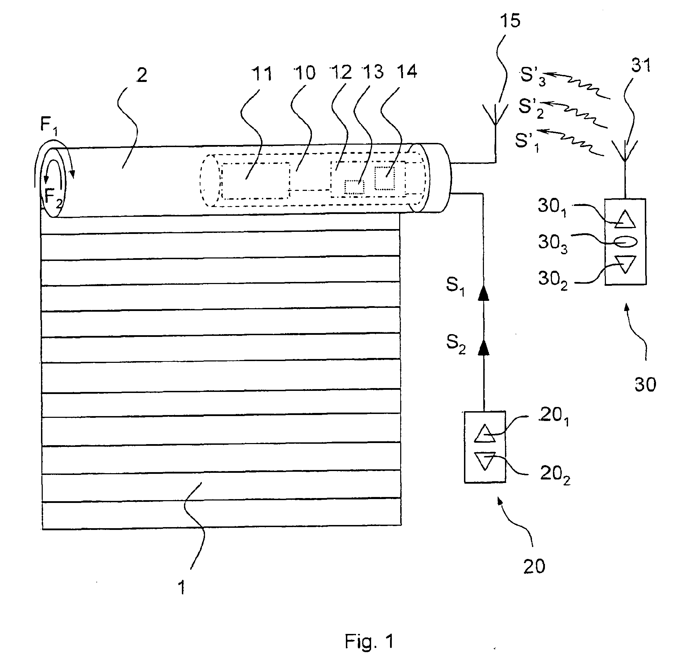

La figure 1 représente un actionneur tubulaire 10 destiné à entraîner un tube d'enroulement 2 sur lequel peut être plus ou moins enroulé un tablier ou écran 1. L'actionneur 10 comprend un motoréducteur électrique 11, relié au tube d'enroulement par une liaison non représentée et une unité électronique 12 pilotant l'alimentation du motoréducteur 11. L'unité électronique intègre également un module 13 permettant de détecter les fins de courses du tablier, c'est à dire, lorsque le tablier atteint des positions déterminées. La détection des fins de courses peut être obtenue par différents moyens comme la détection d'un surcouple, le comptage temporel ou le comptage d'un nombre de tours.

L'unité électronique 12 est pilotée grâce à un boîtier de contrôle filaire 20 et à une télécommande nomade 30. Le moyen de communication illustré pour la commande nomade est la radiofréquence à travers des antennes 15 et 31. On pourrait également utiliser une communication par voie infrarouge entre la télécommande 30 et l'unité 12. L'unité 12 peut n'être contrôlée que par un seul organe, à savoir soit le boîtier 20, soit la télécommande 30.

Les organes de commande 20 et 30 sont munis de touches 20₁, 20₂, 30₁, 30₂, 30₃. Lorsqu'on appuie sur l'une de ces touches, un ordre est transmis à l'unité 12 et, de là à l'actionneur 10.

Pour lever le tablier 1 il suffit d'appuyer sur l'une des touches de montée 20₁ ou 30₁. Lorsque la touche 20₁ est activée, l'unité électronique 12 reçoit un signal S₁ à travers une ligne L₁ de liaison électrique entre le boîtier 20 et l'unité 12. L'unité 12 traite alors ce signal S₁ afin de permettre l'alimentation du motoréducteur 11 de manière à ce que le mouvement de l'actionneur souhaité soit réalisé. Lorsque la touche 30₁ de la télécommande est activée, l'antenne 31 émet un signal radio S'₁ qui est reçu par l'antenne 15 et traité par l'unité 12 comme le signal Si. Dans le cas présent, lorsque l'utilisateur appuie sur une touche « montée » 20₁ ou 30₁, le motoréducteur 11 est alimenté par l'unité 12 pour qu'il entraîne le tube d'enroulement 2 dans le sens de la flèche F₁, le tablier 1 s'enroulant alors autour du tube 2.

Pour un ordre de « descente », les touches à activer sont les touches 20₂ et 30₂, ce qui induit l'émission vers l'unité 12 de signaux d'ordre de descente S₂ ou S'₂, soit à travers la ligne L₁, soit par voie radio. L'actionneur 10 est alors commandé par l'unité 12 pour faire tourner le tube dans le sens de la flèche F₂, ce qui induit l'abaissement du tablier 1.

Pour arrêter le mouvement, si l'organe de commande est équipé d'une touche « stop », comme c'est le cas pour la télécommande 30 avec la touche 30₃, il suffit d'activer cette touche pour émettre un signal d'arrêt S'₃ qui est traité par l'unité 12 pour couper l'alimentation du motoréducteur 11.

Avec un organe de commande plus basique, l'arrêt du mouvement peut être réalisé différemment. Dans un premier cas, un mouvement de « montée » ou « descente » de l'actionneur est obtenu tant que la touche « montée » 20₁ ou « descente » 20₂ est enfoncée. Ainsi, dès que la touche est relâchée, l'écran 1 s'arrête. Dans un deuxième cas, l'arrêt est obtenu lorsqu'on appuie sur la touche correspondant au mouvement inverse. Si la touche « montée » 20₁ ou « descente » 20₂ est enfoncée, cette touche reste activée tant qu'elle n'est pas désactivée par un appui de l'utilisateur, sur l'autre touche « descente » 20₂ ou « montée » 20₁.

Pour régler les fins de courses, l'unité électronique 12 doit basculer en mode d'apprentissage. Ce changement de mode est permis lorsqu'une séquence spécifique ou prédéterminée d'appuis est réalisée sur l'organe de commande 20 ou 30. Cette séquence n'est pas forcément exclusive, il est alors possible que l'unité électronique réagisse à plusieurs séquences spécifiques ou à un autre moyen de basculement. Ainsi, par exemple, l'unité électronique bascule en mode d'apprentissage si une première séquence spécifique est reproduite ou si une seconde séquence spécifique est réalisée ou encore si un bouton programmation de l'organe de commande est appuyé.

Dans la suite de cette description, la séquence prédéterminée S_{prog} est qualifiée de « spécifique » en ce sens qu'il s'agit de la séquence d'appuis sur des touches propre à faire basculer l'unité 12 en mode d'apprentissage. Des informations relatives à la séquence spécifique d'appuis à réaliser pour faire basculer l'unité 12 en mode d'apprentissage sont stockées dans une mémoire 14 de l'unité électronique 12. Par commodité de langage, on considère dans la suite que la séquence spécifique d'appuis S_{prog} est stockée dans la mémoire 14. Préférentiellement, la séquence spécifique est implantée dans le programme d'un microcontrolleur qui peut être monté en lieu et place de la mémoire 14 et dont la fonction est alors de gérer l'actionneur 10. La suite de la description fait référence à la mémoire 14, étant précisé ici qu'elle pourrait également faire référence à un tel microcontrolleur. L'unité électronique compare les signaux qu'elle reçoit de l'organe de contrôle 20 ou 30 avec la séquence stockée dans sa mémoire 14. Si les séquences coïncident, l'unité bascule en mode d'apprentissage, sinon, elle reste en mode d'utilisation.

Dans l'exemple représenté, l'unité électronique 12 est située dans l'actionneur 10 mais celle-ci peut très bien se situer en dehors de l'actionneur, par exemple au niveau de l'organe de contrôle 20 ou 30.

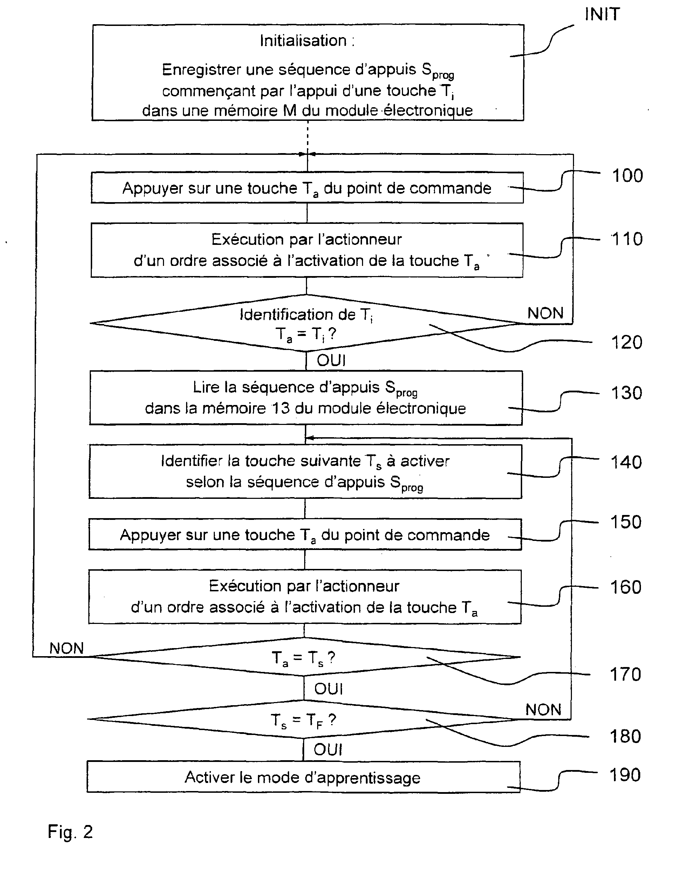

La figure 2 représente un procédé de configuration permettant d'activer le basculement en mode d'apprentissage de l'unité 12.

Une étape d'initialisation INIT permet l'enregistrement de la séquence spécifique d'appuis de touches S_{prog} dans la mémoire 14 de l'unité électronique. Cette phase d'enregistrement peut être réalisée par le constructeur de l'actionneur 10, sur son site de production. La séquence spécifique peut également être directement définie dans le programme. Elle n'est donc pas forcément paramétrable.

La séquence spécifique comprend une première touche Tᵢ à activer. Pour illustrer le procédé, on choisit la séquence S_{prog} suivante : une impulsion sur la touche « montée » de l'organe de commande 20 ou 30, une impulsion sur la touche « descente » et une impulsion sur la touche « montée ». Tᵢ correspond donc à la touche « montée » 20₁ ou 30₁. Chaque impulsion sur une touche induit la transmission d'un signal S₁, S₂, S'₁, S'₂ ou S'₃ à l'unité électronique 12. La séquence spécifique peut ainsi se traduire en terme de signaux reçus. Dans l'exemple présent, ce peut être S₁, S₂, S₁ ou S'₁, S'₂, S'₁ ou un mélange de ces signaux. Par commodité, la séquence sera décrite en correspondance avec les touches appuyées, même si c'est le signal qui permet d'identifier l'exécution de la séquence.

Dans une première étape 100, l'utilisateur appuie sur une touche Tₐ d'un organe de contrôle.

Dans une deuxième étape 110, l'unité 12 traite le signal S₁, S₂, S'₁, S'₂ ou S'₃ reçu de l'organe de contrôle 20 ou 30 et correspondant à la touche Tₐ pour que l'actionneur 10 exécute l'ordre associé à la touche Tₐ. Par exemple, si Tₐ est une touche « montée » 20₁ ou 30₁, l'actionneur 10 est commandé par l'unité 12 pour que le tube 2 tourne dans le sens d'enroulement du tablier 1, selon la flèche F₁.

Dans une troisième étape 120, l'unité électronique 12 identifie, dans sa mémoire 14, quelle touche Tᵢ initialise la séquence spécifique S_{prog} puis compare si la touche activée Tₐ correspond à touche initiale Tᵢ. Si c'est le cas, on passe à une quatrième étape 130. Dans le cas contraire, le procédé se réinitialise et l'unité 12 attend qu'une nouvelle étape 100 se produise. Dans l'exemple ci-dessus, l'appui de la touche « montée » permet de passer à l'étape 130.

L'identification de la touche Tᵢ et la comparaison des touches Tₐ et Tᵢ, qui sont effectuées à l'étape 120, pourraient également avoir lieu lors de deux étapes distinctes.

Lors de l'étape 130, l'unité électronique 12 lit la séquence spécifique S_{prog} stockée dans la mémoire 14.

Dans une cinquième étape 140 suivant l'étape 130, l'unité électronique identifie la touche suivante Tₛ à exécuter si la séquence spécifique S_{prog} est reproduite. La touche suivante Tₛ est la touche venant après la touche activée Tₐ dans une étape précédente selon la séquence spécifique enregistrée. Selon l'exemple mentionné ci-dessus, la touche activée Tₐ, à l'étape 110, correspond à la touche initiale Tᵢ, à savoir la touche « montée ». La touche suivante Tₛ est donc la deuxième touche à activer selon la séquence S_{prog}, à savoir : la touche « descente ».

Dans une sixième étape 150, l'utilisateur appuie sur une nouvelle touche Tₐ.

Dans une septième étape 160, l'unité 12 traite le signal reçu de l'organe de contrôle pour que l'actionneur exécute l'ordre associé à la touche Tₐ. Par exemple, si Tₐ est la touche « descente », le tube 2 est entraîné dans un sens d'abaissement du tablier 1.

Dans une huitième étape 170, l'unité électronique compare si la touche activée Tₐ correspond à touche suivante Tₛ identifiée à l'étape 140. Si tel est le cas, on passe à une étape 180. Dans le cas contraire, le procédé se réinitialise et l'unité 12 attend qu'une nouvelle étape 100 se produise.

Dans une neuvième étape 180, l'unité électronique identifie si la touche suivante T_{S} identifiée à l'étape 140 constitue la dernière touche T_{F} de la séquence S_{prog}. En d'autres termes, l'unité 12 vérifie qu'il n'y a pas de touche à activer après l'action de l'étape 150, selon la séquence spécifique enregistrée S_{prog}. Si tel est le cas, on passe à une dixième étape 190. Dans le cas contraire, le procédé revient à l'étape 140.

Dans l'exemple, mentionné ci-dessus, l'utilisateur a appuyé une fois sur la touche « montée » et une fois sur la touche « descente ». Il reste à appuyer encore une fois sur la touche « montée » pour terminer la séquence spécifique. Le procédé passe donc à l'étape 140. Lors de cette étape 140, Tₛ correspondra à la touche « montée ». Si, à l'étape 150, l'utilisateur active le bouton « montée », alors la séquence S_{prog} sera reproduite complètement et l'unité passera à l'étape 190 après l'étape 180. Dans cette dixième étape 190, l'unité électronique bascule en mode d'apprentissage.

En variante du procédé décrit ci-dessus, l'étape 130 peut précéder l'étape 120. Dans ce cas, l'identification de la touche Tᵢ a lieu lors de l'étape 130 et l'étape 120 ne comprend que la vérification de l'égalité entre Tₐ et Tᵢ.

L'ordre exécuté par l'actionneur 10 aux étapes 110 et 160 correspond à un ordre de changement d'état de l'actionneur. Si le moteur est à l'arrêt, un changement d'état est un mouvement de l'actionneur. Si le moteur est en mouvement, un changement d'état est un arrêt ou un mouvement dans l'autre sens. Dans le cas où le mouvement de l'actionneur est réalisé tant que la touche du point de commande est activée, le fait de relâcher et d'appuyer de nouveau sur la même touche provoque un changement d'état de l'actionneur. En effet, au moment où la touche est relâchée, le moteur s'arrête.

Il peut également être prévu que la séquence spécifique S_{prog} ne comprend que des ordres provoquant un mouvement de l'actionneur. Un ordre d'arrêt n'est alors pas considéré.

De manière analogue, un autre mode de réalisation consiste à ne pas prendre en considération l'activation de certaines touches. Par exemple, S_{prog} peut correspondre à trois impulsions sur la touche « montée ». La touche « stop » peut alors ne pas être considérée. Dans ce cas, la séquence : « montée » / « stop » / « montée » / « stop » / « montée » reproduit la séquence enregistrée S_{prog}. L'unité électronique 12 bascule alors en mode d'apprentissage lorsqu'elle reçoit cette séquence.

Dans toutes ses variantes, le procédé de l'invention est indépendant de la position de l'écran 1. Il n'est donc pas nécessaire que l'écran soit amené ou passe par une position particulière pour que l'unité 12 bascule en mode d'apprentissage à l'étape 190.

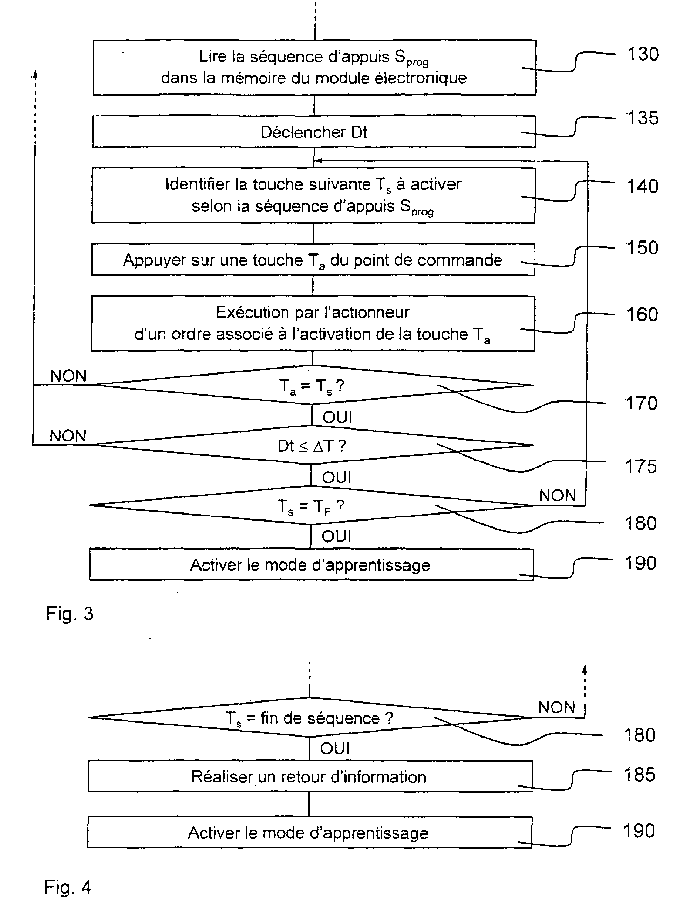

Préférentiellement, le procédé incorpore une temporisation permettant de définir une période pendant laquelle la séquence spécifique doit être exécutée. La séquence doit, par exemple, être reproduite en moins de six secondes. Cette variante est illustrée par la figure 3.

Dans la variante de la figure 3 une étape 135, postérieure à l'étape 130 et antérieure à l'étape 140, l'unité électronique 12 déclenche un compteur de temps Dt. Dans une étape ultérieure 175, postérieure à l'étape 170, et antérieure à l'étape 180 on compare si la touche Tₛ de la séquence spécifique a été activée à l'étape 160 avant la fin d'une période ΔT prédéterminée, égale à six secondes dans cet exemple. Si tel est le cas, on passe à une étape 180. Dans le cas contraire, le procédé se réinitialise et l'unité 12 attend qu'une nouvelle étape 100 se produise.

En variante, l'étape 175 peut être déplacée entre les étapes 180 et 190. Dans ce cas, on vérifie que la séquence S_{prog} a bien été effectuée dans la période prescrite uniquement à la fin de cette séquence.

Il est également possible d'insérer une comparaison identique à celle de l'étape 175 lors d'une étape, postérieure à l'étape 140 et antérieure à l'étape 150, dont les conséquences sont alors analogues à celle de l'étape 175.

En variante, on peut également vérifier grâce à une temporisation que la durée d'exécution de la séquence spécifique est supérieure à une valeur prédéterminée, par exemple égale à 4 secondes. Dans ce cas, la séquence spécifique doit être effectuée sur une durée comprise entre 4 et 6 secondes.

Un autre mode de réalisation consiste à intégrer dans la séquence spécifique des durées de maintien de touches enfoncées à reproduire. Par exemple, lorsque la séquence spécifique S_{prog} est constituée de trois appuis successifs pour laquelle chaque appui doit être effectué dans un intervalle de temps compris entre 100 millisecondes (ms) et 1 seconde (s), si l'on appuie une fois plus longtemps sur cette touche, c'est à dire, plus d'une seconde, alors la séquence n'est pas correctement reproduite et le mode d'apprentissage n'est pas activé. L'unité 12 attend qu'une nouvelle étape 100 se produise. Selon une autre approche, les étapes de vérification 120 et 170 comprennent une vérification de ce que la durée d'activation de la touche Ta correspond à l'intervalle de temps prédéterminée, à savoir entre 100 ms et 1 s dans l'exemple. Généralement, cette contrainte suffit pour se prémunir de l'exécution fortuite de la séquence spécifique en mode de fonctionnement normal. Pour des raisons d'économie d'énergie, seule la durée de maintien peut être prise en compte dans la séquence spécifique et non la durée totale de la séquence. En effet, si la durée totale de la séquence est prise en compte, il faut alors alimenter l'unité de contrôle en dehors des moments où les touches sont appuyées, afin de compter le temps s'écoulant, ce qui augmente la consommation énergétique.

A la fin du procédé comme représenté à la figure 4, un retour d'information peut être réalisé dans une étape 185, afin de confirmer à l'utilisateur le basculement effectif de l'unité 12 en mode d'apprentissage lors de l'étape 190. Ce retour d'information peut être un mouvement spécifique de l'écran, par exemple un mouvement de va-et-vient, l'éclairage d'un voyant ou l'activation momentanée d'un buzzer.

La séquence spécifique S_{prog} peut être modifiée par le constructeur, l'installateur ou l'utilisateur après la sortie d'atelier de l'actionneur 10. Pour ce faire, une nouvelle séquence prédéterminée S'_{prog} peut être enregistrée suite à une opération de programmation spécifique, en activant des touches selon une séquence choisie, lorsque l'unité électronique est déjà en mode d'apprentissage. La nouvelle séquence est alors exécutée et enregistrée simultanément dans la mémoire 14 de l'unité électronique.

Le mode d'apprentissage de l'unité 12 ne se limite pas uniquement aux réglages de fins de courses. D'autres paramètres peuvent être réglés dans ce mode.

L'invention a été décrite dans le cas de son utilisation pour la manoeuvre d'un volet roulant. Elle est également applicable à la manoeuvre d'un store et, plus généralement, de tout écran domotique de fermeture, de protection solaire ou de projection.

Les caractéristiques techniques des différents modes de réalisation décrits peuvent être combinées entre elles dans le cadre de l'invention.

## Revendications

1. Procédé de configuration d'un système d'entraînement d'un écran (1) de fermeture, de protection solaire ou de projection, ce système comprenant :
- un actionneur (10) d'entraînement de l'écran
- au moins un organe de contrôle (20, 30) pourvu d'au moins une touche (20₁, 20₂, 30₁, 30₂, 30₃)
- une unité électronique (12) apte à commander l'actionneur en fonction d'un signal de contrôle (S₁, S₂, S'₁, S'₂, S'₃) reçu de l'organe de contrôle,
alors que le procédé comprend une étape (190) de basculement de l'unité électronique en mode d'apprentissage, sur la base d'une série de signaux de contrôle reçue de l'organe de contrôle, cette série de signaux résultant de l'exécution d'une séquence prédéterminée d'appuis (S_{prog}) sur au moins une touche de l'organe de contrôle,
**caractérisé en ce que**, lors de l'exécution de la séquence prédéterminée d'appui(s) et avant l'étape (190) de basculement, l'unité de électronique (12) change l'état de l'actionneur (10), en fonction d'au moins un signal (S₁, S₂, S'₁, S'₂, S'₃) reçu de l'organe de contrôle (20, 30) de la même façon que lorsque l'organe de contrôle est utilisé pour piloter le système d'entraînement en mode d'utilisation normal..

2. Procédé selon l'une des revendications précédentes, **caractérisé en ce que** la séquence prédéterminée (S_{prog}) d'appuis sur la ou les touches (20₁, 20₂, 30₁, 30₂, 30₃) de l'organe de commande (20, 30) n'induit pas que l'écran (1) atteigne une position particulière avant le basculement (190) de l'unité électronique en mode d'apprentissage.

3. Procédé selon l'une des revendications précédentes, **caractérisé en ce que**, dans le cas où l'organe de contrôle (20, 30) est pourvu de plusieurs touches (20₁, 20₂, 30₁, 30₂, 30₃) , au moins un signal (S'₃) résultant d'un appui sur une (30₃) de ses touches lors de la séquence prédéterminée (S_{prog}) n'est pas pris en compte par l'unité électronique (12) comme appartenant à la série prédéterminée (S_{prog}) de signaux de contrôle induisant le basculement (190) de l'unité électronique en mode d'apprentissage.

4. Procédé selon l'une des revendications précédentes, **caractérisé en ce qu'**il comprend des étapes successives dans lesquelles :
a) - l'unité électronique (12) traite (110) des signaux (S₁, S₂, S'₁, S'₂, S'₃) reçus d'au moins un organe de contrôle (20, 30) et fait exécuter à l'actionneur (10) un ordre associé à une touche activée (Tₐ)
b) - l'unité électronique identifie (120) la touche initiale (Tᵢ) de la séquence prédéterminée d'appuis (S_{prog})
c) - l'unité électronique compare (120) la touche activée (Tₐ) et la touche initiale (Tᵢ).

5. Procédé selon la revendication 4, **caractérisé en ce que** l'unité électronique bascule (190) en mode d'apprentissage lorsque le résultat de la comparaison de l'étape c) est positif et que l'exécution complète de la séquence prédéterminée d'appuis (S_{prog}) est détectée par l'unité électronique.

6. Procédé selon la revendication 4, **caractérisé en ce qu'**il comprend des étapes successives, mises en oeuvre si le résultat de la comparaison de l'étape c) est positif et dans lesquelles :
e) - l'unité électronique accède (130) à une mémoire (14) de stockage d'informations relatives à la séquence prédéterminée d'appuis (S_{prog})
f) - l'unité électronique identifie une touche suivante (Ts) à activer selon la séquence prédéterminée d'appuis (S_{prog})
g) - lorsqu'elle reçoit un signal (S₁, S₂, S'₁, S'₂, S'₃) l'unité électronique fait exécuter à l'actionneur un ordre associé à la touche (Tₐ) dont l'activation correspond au signal reçu
h) - l'unité électronique compare (170) la touche activée (T^{a}) à la touche suivante (Tₛ)
i) - si le résultat de la comparaison de l'étape h) est positif, l'unité électronique compare (180) la touche suivante identifiée lors de l'étape f) est égale à la touche finale (T_{F}) de la séquence prédéterminée d'appuis (S_{prog})
**en ce que** les étapes e) et i) sont reproduites tant que le résultat de la comparaison de l'étape h) est positif et que le résultat de la comparaison de l'étape i) est négatif et
**en ce que** l'unité électronique bascule (190) en mode d'apprentissage lorsque le résultat de la comparaison de l'étape i) est positif

7. Procédé selon la revendication 6, **caractérisé en ce que** si le résultat de la comparaison de l'une des étapes c) ou h) est négatif, l'unité électronique (12) passe à un état d'attente à partir duquel elle exécute les étapes a) à c) lorsqu'elle reçoit un signal (S₁, S₂, S'₁, S'₂, S'₃) de la part d'un organe de contrôle (20, 30).

8. Procédé selon l'une des revendications précédentes, **caractérisé en ce qu'**il comprend une étape (175) de vérification que la durée d'exécution de la séquence prédéterminée d'appuis (S_{prog}) est inférieure à une valeur de seuil (ΔT) et, si le résultat de cette vérification est négatif, l'unité électronique (12) passe à un état d'attente à partie duquel elle exécute les étapes a) à c) lorsqu'elle reçoit un signal (S₁, S₂, S'₁, S'₂, S'₃) de la part d'un organe de contrôle (20, 30).

9. Procédé selon l'une des revendications précédentes, **caractérisé en ce qu'**il comprend une étape de vérification que la durée d'activation d'une touche (Ta) lors de la séquence prédéterminée d'appuis (S_{prog}) a une valeur supérieure à une première valeur de seuil et inférieure à une deuxième valeur de seuil et, si le résultat de cette vérification est négatif, l'unité électronique (12) passe à un état d'attente à partir duquel elle exécute les étapes a) à c) lorsqu'elle reçoit un signal (S₁, S₂, S'₁, S'₂, S'₃) de la part d'un organe de contrôle (20, 30).

10. Procédé selon l'une des revendications précédentes, **caractérisé en ce que**, lorsque l'unité électronique bascule (190) en mode d'apprentissage, un retour d'information est adressé à l'utilisateur (185), sous forme visuelle ou sonore.

11. Procédé selon l'une des revendications précédentes, **caractérisé en ce que**, lorsque l'unité électronique (12) a basculé en mode d'apprentissage (190), il est possible d'enregistrer une séquence prédéterminée d'appuis (S'_{prog}) permettant de faire basculer ultérieurement l'unité électronique (12) en mode d'apprentissage, l'enregistrement de cette séquence ayant lieu en activant des touches (20₁, 20₂, 30₁, 30₂, 30₃) d'un organe de contrôle (20, 30).

## Claims

1. A method of configuring a system for driving a screen (1) for closure, sun protection, or projection purposes, the system comprising:
• an actuator (10) for driving the screen;
• at least one control member (20, 30) provided with at least one button (20₁, 20₂, 30₁, 30₂, 30₃); and
• an electronic unit (12) suitable for controlling the actuator as a function of a control signal (S₁, S₂, S'₁, S'₂, S'₃) received from the control member;
the method comprising a step (190) of switching the electronic unit over to a training mode, on the basis of a series of control signals received by the control member, said series of signals being the result of executing a predetermined press sequence (S_{prog}) on at least one button of the control member;
Wherein, during execution of the predetermined press sequence and prior to the switching step (190), the electronic unit (12) changes the state of the actuator (10) as a function of at least one signal (S₁, S₂, S'₁, S'₂, S'₃) received from the control member (20, 30) in the same manner as when the control member is used for controlling the drive system in normal operation.

2. A method according to one of the previous claims, wherein the predetermined press sequence (S_{prog}) on the button(s) (20₁, 20₂, 30₁, 30₂, 30₃) of the control member (20, 30) does not cause the screen (1) to reach a particular position prior to switching (190) the electronic unit over to training mode.

3. A method according to one of the previous claims, wherein when the control member (20, 30) is provided with a plurality of buttons (20₁, 20₂, 30₁, 30₂, 30₃), at least one signal (S'₃) resulting from pressing on one of its buttons (30₃) during the predetermined sequence (S_{prog}) is not taken into account by the electronic unit (12) as forming part of the predetermined series (S_{prog}) of control signals giving rise to the electronic unit switching (190) over to training mode.

4. A method according to one of the previous claims, wherein it comprises the following successive steps:
a) The electronic unit (12) processes (110) signals (S₁, S₂, S'₁, S'₂, S'₃) received from at least one control member (20, 30) and causes the actuator (10) to execute an order associated with an activated button (Tₐ);
b) The electronic unit identifies (120) the initial button (Tᵢ) of the predetermined press sequence (S_{prog}); and
c) The electronic unit compares (120) the activated button (Tₐ) with the initial button (Ti).

5. A method according to claim 4, wherein the electronic unit switches (190) over to training mode when the result of the comparison in step c) is positive and once complete execution of the predetermined press sequence (S_{prog}) has been detected by the electronic unit.

6. A method according to claim 4, wherein if the result of the comparison of step c) is positive, the method comprises the following successive steps:
e) the electronic unit accesses (130) a memory (14) storing information relating to the predetermined press sequence (S_{prog}) ;
f) the electronic unit identifies a following button (Tₛ) to be activated in the predetermined press sequence (S_{prog}) ;
g) on receiving a signal (S₁, S₂, S'₁, S'₂, S'₃) the electronic unit causes the actuator to execute an order associated with the button (Tₐ) that corresponds to the received signal on being activated;
h) the electronic unit compares (170) the activated button (Tₐ) with the following button (Tₛ); and
i) if the result of the comparison in step h) is positive, the electronic unit compares (180) whether the following button identified during step f) matches the final button (T_{F}) of the predetermined press sequence (S_{prog});
wherein steps e) and i) are reproduced so long as the result of the comparison in step h) is positive and the result of the comparison in step i) is negative; and wherein the electronic unit switches (190) over to training mode when the result of the comparison of step i) is positive.

7. A method according to claim 6, wherein, if the result of the comparison of either of the steps c) or h) is negative, then the electronic unit passes to a waiting state from which it executes steps a) to c) on receiving a signal (S₁, S₂, S'₁, S₂, S'₃) from a control member (20, 30).

8. A method according to one of the previous claims, wherein it includes a step (175) for verifying whether the duration of the execution of the predetermined press sequence (S_{prog}) is less than a threshold value (ΔT), and if the result of this verification is negative, then the electronic unit (12) passes to a waiting state from which it executes steps a) to c) on receiving a signal (S₁, S₂, S'₁, S'₂, S'₃) from a control member (20, 30).

9. A method according to one of the previous claims, wherein it includes a step of verifying whether the duration of a button (Tₐ) activation during the predetermined press sequence (S_{prog}) has a value greater than a first threshold value and less than a second threshold value, and if the result of this verification is negative, then the electronic unit (12) passes to a waiting state from which it executes steps a) to c) on receiving a signal (S₁, S₂*,* S'₁, S'₂, S'₃) from a control member (20, 30).

10. A method according to one of the previous claims, wherein, when the electronic unit switches (190) over to training mode, return information is sent to the user (185) in visual or audible form.

11. A method according to one of the previous claims, wherein, when the electronic unit (12) has switched over to training mode (190), it is possible to record a predetermined press sequence (S'_{prog}), enabling the electronic unit (12) subsequently to switch over to training mode, this sequence being recorded by activating the buttons (20₁, 20₂, 30₁, 30₂, 30₃) of a control member (20, 30).

## Patentansprüche

1. Verfahren zum Konfigurieren eines Antriebssystems eines Verschluss-, Sonnenschutz- oder Projektionsschirms (1), wobei dieses System Folgendes umfasst:
- ein Antriebsstellglied (10) des Schirms,
- mindestens ein Steuerelement (20, 30), das mit mindestens einer Taste (20₁, 20₂, 30₁, 30₂, 30₃) versehen ist,
- eine Elektronikeinheit (12), die dazu geeignet ist, um das Stellglied in Abhängigkeit von einem Steuersignal (S₁, S₂, S'₁, S`₂, S'₃), das von dem Steuerelement empfangen wird, zu steuern,
während das Verfahren einen Schritt (190) des Umschaltens der Elektronikeinheit in einen Lernmodus umfasst, basierend auf einer Reihe von Steuersignalen, die von dem Steuerelement empfangen werden, wobei sich diese Signalreihe aus der Durchführung einer vorherbestimmten Folge von Betätigungen (S_{prog}) an mindestens einer Taste des Steuerelements ergibt,
**dadurch gekennzeichnet, dass** bei der Durchführung der vorherbestimmten Folge von Betätigungen und vor dem Schritt (190) des Umschaltens die Elektronikeinheit (12) den Zustand des Stellglieds (10) in Abhängigkeit von mindestens einem Signal (S₁, S₂, S'₁, S'₂, S'₃), das von dem Steuerelement (20, 30) empfangen wird, auf die gleiche Art und Weise ändert, als wenn das Steuerelement verwendet würde, um das Antriebssystem im normalen Gebrauchsmodus anzusteuern.

2. Verfahren nach dem vorhergehenden Anspruch, **dadurch gekennzeichnet, dass** die vorherbestimmte Folge (S_{prog}) von Betätigungen an der oder den Tasten (20₁, 20₂, 30₁, 30₂, 30₃) des Steuerelements (20, 30) nicht dazu führt, dass der Schirm (1) vor dem Umschalten (190) der Elektronikeinheit in den Lernmodus eine bestimmte Position erreicht.

3. Verfahren nach einem der vorhergehenden Ansprüche, **dadurch gekennzeichnet, dass**, wenn das Steuerelement (20, 30) mit mehreren Tasten (20₁, 20₂, 30₁, 30₂, 30₃) versehen ist, mindestens ein Signal (S'₃), das sich aus einer Betätigung an einer (30₃) seiner Tasten bei der vorherbestimmten Folge (S_{prog}) ergibt, nicht von der Elektronikeinheit (12) als zu der vorherbestimmten Folge (S_{prog}) von Steuersignalen, die das Umschalten (190) der Elektronikeinheit in den Lernmodus herbeiführen, gehörend berücksichtigt wird.

4. Verfahren nach einem der vorhergehenden Ansprüche, **dadurch gekennzeichnet, dass** es aufeinanderfolgende Schritte umfasst, bei denen:
a) die Elektronikeinheit (12) Signale (S₁, S₂, S'₁, S'₂, S'₃) verarbeitet (110), die von mindestens einem Steuerelement (20, 30) empfangen werden, und das Stellglied (10) dazu veranlasst, einen Befehl auszuführen, der mit einer aktivierten Taste (Tₐ) verbunden ist,
b) die Elektronikeinheit (120) die Anfangstaste (Tᵢ) der vorherbestimmten Folge (S_{prog}) von Betätigungen identifiziert,
c) die Elektronikeinheit (120) die aktivierte Taste (Tₐ) mit der Anfangstaste (Tᵢ) vergleicht.

5. Verfahren nach Anspruch 4, **dadurch gekennzeichnet, dass** die Elektronikeinheit in den Lernmodus umschaltet (190), wenn das Ergebnis des Vergleichs in Schritt c) positiv ist und die vollständige Durchführung der vorherbestimmten Folge (S_{prog}) von Betätigungen von der Elektronikeinheit erkannt wird.

6. Verfahren nach Anspruch 4, **dadurch gekennzeichnet, dass** es aufeinanderfolgende Schritte umfasst, die umgesetzt werden, wenn das Ergebnis des Vergleichs aus Schritt c) positiv ist, und in denen:
e) die Elektronikeinheit (130) auf einen Speicher (14) zum Speichern von Informationen über die vorherbestimmte Folge (S_{prog}) von Betätigungen zugreift,
f) die Elektronikeinheit eine nächste Taste (Tₛ) identifiziert, die gemäß der vorherbestimmten Folge (S_{prog}) von Betätigungen zu aktivieren ist,
g) die Elektronikeinheit, wenn sie ein Signal (S₁, S₂, S'₁, S'₂, S'₃) empfängt, das Stellglied veranlasst, einen Befehl auszuführen, der mit der Taste (Tₐ) verbunden ist, deren Aktivierung dem empfangenen Signal entspricht,
h) die Elektronikeinheit (170) die aktivierte Taste (Tₐ) mit der nächsten Taste (Tₛ) vergleicht,
i) wenn das Ergebnis des Vergleichs in Schritt h) positiv ist, die Elektronikeinheit vergleicht (180), ob die nächste Taste, die in Schritt f) identifiziert wurde, gleich der letzten Taste (T_{F}) der vorherbestimmten Folge (S_{prog}) von Betätigungen ist,
dass die Schritte e) und i) solange wiederholt werden, bis das Ergebnis des Vergleichs des Schritts h) positiv ist und das Ergebnis des Vergleichs des Schritts i) negativ ist, und
dass die Elektronikeinheit in den Lernmodus umschaltet (190), wenn das Ergebnis des Vergleichs aus Schritt i) positiv ist.

7. Verfahren nach Anspruch 6, **dadurch gekennzeichnet, dass** die Elektronikeinheit (12), wenn das Ergebnis des Vergleichs eines der Schritte c) oder h) negativ ist, in einen Wartezustand übergeht, aus dem sie die Schritte a) bis c) ausführt, wenn sie ein Signal (S₁, S₂, S'₁, S'₂, S'₃) von einem Steuerelement (20, 30) empfängt.

8. Verfahren nach einem der vorhergehenden Ansprüche, **dadurch gekennzeichnet, dass** es einen Schritt (175) der Überprüfung umfasst, dass die Ausführungsdauer der vorherbestimmten Folge (S_{prog}) von Betätigungen kürzer als ein Schwellenwert (ΔT) ist, und die Elektronikeinheit (12), wenn das Ergebnis dieser Überprüfung negativ ist, in einen Wartezustand übergeht, aus dem aus sie die Schritte a) bis c) ausführt, wenn sie ein Signal (S₁, S₂, S'₁, S'₂, S'₃) von einem Steuerelement (20, 30) empfängt.

9. Verfahren nach einem der vorhergehenden Ansprüche, **dadurch gekennzeichnet, dass** es einen Schritt der Überprüfung umfasst, dass die Aktivierungsdauer einer Taste (Tₐ) bei der vorherbestimmten Folge (S_{prog}) von Betätigungen einen Wert aufweist, der größer als ein erster Schwellenwert und kleiner als ein zweiter Schwellenwert ist, und die Elektronikeinheit (12), wenn das Ergebnis dieser Überprüfung negativ ist, in einen Wartezustand übergeht, aus dem sie die Schritte a) bis c) ausführt, wenn sie ein Signal (S₁, S₂, S'₁, S'₂, S'₃) von einem Steuerelement (20, 30) empfängt.

10. Verfahren nach einem der vorhergehenden Ansprüche, **dadurch gekennzeichnet, dass** dem Benutzer (185) eine Informationsrückmeldung in optischer oder akustischer Form zugestellt wird, wenn die Elektronikeinheit (190) in den Lernmodus umschaltet.

11. Verfahren nach einem der vorhergehenden Ansprüche, **dadurch gekennzeichnet, dass** es möglich ist, wenn die Elektronikeinheit (12) in den Lernmodus (190) umgeschaltet hat, eine vorherbestimmte Folge (S'_{prog}) von Betätigungen aufzuzeichnen, die es ermöglicht, die Elektronikeinheit (12) später in einen Lernmodus umzuschalten, wobei die Aufzeichnung dieser Folge durch Aktivieren der Tasten (20₁, 20₂, 30₁, 30₂, 30₃) eines Steuerelements (20, 30) stattfindet.
